# FASCICULE DE BREVET EUROPEEN

(11) **EP 0 683 013 B1**
(45) Date de publication et mention de la délivrance du brevet: **09.12.1998**
(21) Numéro de dépôt: 95401045.0
(22) Date de dépôt: 05.05.1995
(51) Int. Cl.: B24B 41/047

(54) **Dispositif de surfacage ou de polissage de matériaux pierreux**
Vorrichtung zum Planen oder Polieren von steinigen Materialen
Device for planing or polishing of stonelike materials

(30) Priorité: 11.05.1994 FR 9405791
(43) Date de publication de la demande: 22.11.1995
(73) Titulaire: THIBAUT S.A., F-14500 Vire (FR)
(72) Inventeur: Thibaut, Bernard, F-14500 Vire (FR)
(74) Mandataire: Kaspar, Jean-Georges

(56) Documents cités:
- EP-A- 0 236 865
- EP-A- 0 242 845
- DE-A- 4 224 846
- DE-U- 8 808 679

## Description

L'invention est relative à un dispositif de surfaçage ou de polissage de matériaux pierreux, par exemple du granit ou du marbre.

On connaît des têtes de polissage commercialisées sous l'appellation BS6 par la Société THIBAUT de droit français. Ces têtes de polissage adaptables sur machine à ponts et ligne de polissage comportent six éléments porteurs de meules plates appelées habituellement "briquettes" par les hommes de l'art. Les six éléments porteurs sont animés d'un mouvement d'oscillation de manière à faire travailler les meules ou briquettes suivant une génératrice lorsque la tête de polissage est entraînée en rotation lors du surfaçage ou du polissage. Ces têtes de polissage connues comportent un moyen d'accouplement à une machine d'entraînement en rotation d'axe horizontal ou vertical et un moyen d'immobilisation de la couronne de la tête de polissage, de manière à faire tourner une came d'entraînement à une vitesse différente de la vitesse de la tête de polissage et à créer l'oscillation précitée des meules plates ou briquettes.

Ces dispositifs connus donnent généralement satisfaction, mais présentent l'inconvénient selon lequel l'oscillation est engendrée par un mécanisme complexe et coûteux à fabriquer : ce mécanisme de type alternatif dans les têtes BS6 peut également en variante être un mécanisme planétaire comportant des satellites entraînés autour d'une couronne principale à une vitesse différente de la vitesse de rotation de la tête. Un autre mécanisme est décrit dans DE-U-88 08 679 avec un mécanisme excentrique entraîné en rotation autour d'une couronne principale.

D'une part, de tels mécanismes sont coûteux à fabriquer, à monter et à régler avec précision ; d'autre part, le diamètre important nécessité par la présence de tels mécanismes résulte en une fabrication de têtes lourdes et encombrantes, permettant uniquement le polissage de grandes surfaces.

L'invention a pour but de remédier aux inconvénients précités, en créant un nouveau dispositif de polissage ou de surfaçage, dont la conception permet la fabrication selon des diamètres réduits, aptes à permettre le polissage de petites surfaces, et dont le mécanisme d'oscillation est particulièrement simple et économique à fabriquer et à monter.

L'invention a pour objet un dispositif de surfaçage ou de polissage de matériaux pierreux, du type comportant au moins deux éléments porteurs de meules plates ou briquettes, lesdits, éléments étant animés d'un mouvement d'oscillation de manière a faire travailler les meules ou briquettes suivant une genératrice de la surface de la meule ou briquette en contact avec le matériau à polir ou à surfacer lorsque le dispositif est entrâiné en rotation lors du surfaçage ou polissage, caracterisé en ce que les moyens d'entrainement en oscillation des meules plates ou briquettes comportent un écoulement intermittent ou un écoulement continu à débit variable d'un fluide (liquide ou gaz), le mouvement d'oscillation des meules plates ou briquettes étant produit en réponse à l'intermittence dudit écoulement intermittent ou aux variations de débit. Dudit écoulement continu à débit variable

Selon d'autres caractéristiques de l'invention :
- l'écoulement fluide est un écoulement d'eau ou de liquide de refroidissement équivalent, de manière à assurer simultanément la lubrification au cours du polissage et l'entraînement en oscillation des éléments porteurs ;
- le dispositif comporte un vérin souple présentant au moins une ondulation, ainsi qu'un moyen élastique formant ressort, de manière à faire osciller les éléments porteurs entre une première position d'extension du vérin souple et de compression du moyen élastique et une deuxième position de rétraction du vérin souple et de détente élastique dudit moyen élastique ;
- le vérin souple est solidaire d'un doigt poussoir empêchant la rétraction totale du vérin souple et appuyant simultanément sur une extrémité d'un élément porteur ;
- le moyen élastique est un ressort ou une butée progressive en élastomère ;
- les éléments porteurs sont conformés en mortaises d'axe orienté suivant un angle avec la direction radiale ;
- l'écoulement fluide est soumis à un étranglement par réduction de section ;
- l'écoulement fluide est commandé de manière réglable par des moyens appropriés, notamment du genre électrovanne commandée par un temporisateur ou analogue ;
- le dispositif est conformé en chambre sensiblement cylindrique traversée par ledit écoulement fluide, munie d'une extrémité de montage sur l'arbre d'entraînement en rotation et munie d'une autre extrémité conformée en platine de support des éléments porteurs ;
- les axes de support des éléments porteurs sont orientés sensiblement radialement.

L'invention sera mieux comprise grâce à la description qui va suivre donnée à titre d'exemple non limitatif en référence aux dessins annexés dans lesquels :
La figure 1 représente une vue schématique en coupe radiale partielle d'un dispositif selon l'invention.
La figure 2 représente une vue schématique de dessous d'un dispositif selon l'invention.
La figure 3 représente schématiquement une vue en coupe radiale selon la ligne III-III de la figure 2 d'un élément porteur d'une meule plate selon l'invention.
La figure 4 représente schématiquement une vue selon la flèche IV de la figure 3 d'un élément porteur de meule plate selon l'invention.
La figure 5 représente schématiquement une vue schématique de dessous analogue à la figure 2 d'un autre dispositif selon l'invention dont les briquettes ont été enlevées.

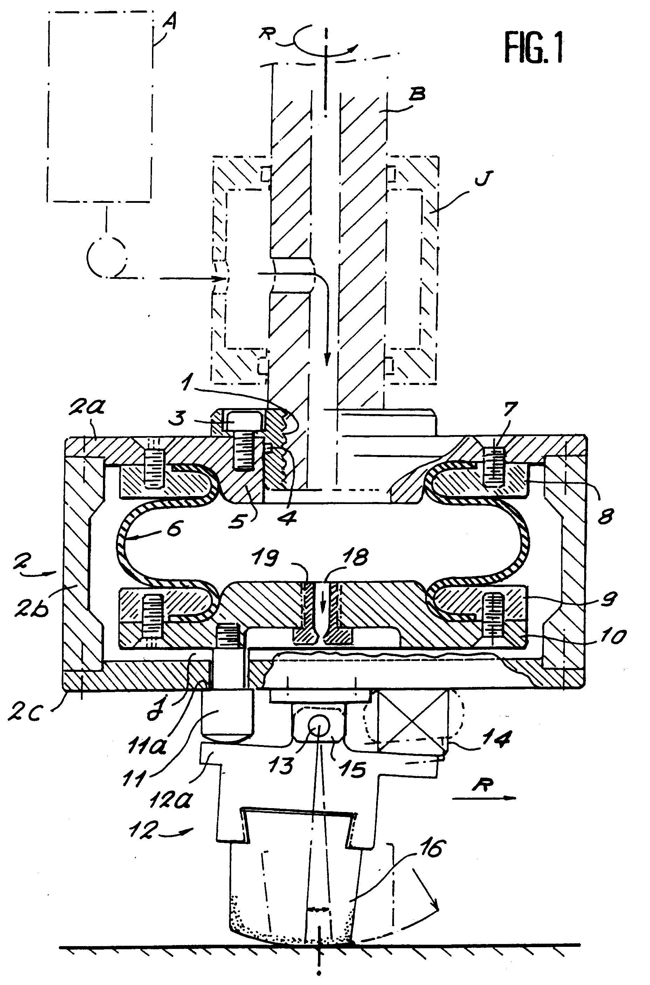

En référence aux figures 1 à 4, un dispositif selon l'invention est entraîné en rotation R par un arbre de broche d'une machine d'entraînement à axe horizontal ou vertical. L'accouplement du dispositif selon l'invention à la machine d'entraînement se fait uniquement par l'arbre de broche B schématisé en traits pointillés, sans qu'aucune autre liaison d'immobilisation en rotation ne soit nécessaire, ce qui était le cas dans l'art antérieur dans lequel il était nécessaire d'immobiliser la couronne principale de manière à faire tourner la came de génération d'oscillation à une vitesse différente de la vitesse de rotation de la tête de polissage.

Une alimentation de fluide A, schématisée en traits pointillés, injecte du fluide à travers un joint tournant J, de type connu en soi et représenté en traits pointillés, à l'intérieur de l'arbre de broche B, de manière à produire un écoulement fluide sensiblement coaxial à l'axe de rotation R du dispositif.

Le dispositif selon l'invention est fixé à l'arbre de broche B par un taraudage 1 ou moyen équivalent solidarisé au corps principal 2 du dispositif, par exemple par vis 3, selon un montage étanche comportant un joint 4. Le fait de rapporter le taraudage de fixation 1 indépendamment permet l'adaptation et le montage d'un dispositif selon l'invention sur des arbres de broche de diamètre différent.

Le corps principal 2 est conformé en chambre sensiblement cylindrique, assemblée à partir d'un flasque 2a, d'une couronne cylindrique 2b et d'une platine inférieure 2c assemblées entre elles par exemple par des vis schématisées par des axes représentés en traits mixtes. Le flasque supérieur 2a comporte un alésage central recevant le taraudage ou nez fileté 1 d'adaptation sur des machines d'entraînement en rotation, ainsi qu'une conformation 5 radialement intérieure assurant une fonction de centrage d'un vérin souple 6 présentant au moins une ondulation et réalisé de préférence en matériau de type élastomère, caoutchouc ou équivalent, et porte en outre des moyens de fixation 7 du genre vis aptes à solidariser la platine supérieure 8 du vérin souple 6 de manière à lier rigidement l'extrémité supérieure du vérin souple 6 au flasque 2a.

Le vérin souple 6 comporte une bride inférieure 9 montée solidaire d'un disque mobile 10 à déplacement axial au moyen de fixations du genre vis. Le disque mobile 10 est distant de la platine inférieure 2c d'un jeu j prédéterminé compris entre 1 à 5mm au repos et présente un libre débattement sensiblement coaxial à l'axe du dispositif selon une amplitude de débattement limitée par des butées 11 empêchant la rétraction totale du vérin souple 6 et appuyant simultanément sur une extrémité 12a d'un élément porteur 12.

Chaque poussoir 11 anti-rétraction est vissé dans le disque oscillant 10 ; il comporte un épaulement 11a coopérant avec le bord inférieur d'un orifice correspondant de la platine inférieure 2c du corps 2. Chaque élément porteur 12 est monté oscillant autour d'un axe 13, de manière à osciller entre une première position d'extension du vérin souple 6 correspondant à la compression d'une butée élastique 14 et une deuxième position de rétraction du vérin souple 6 et de détente élastique de la butée 14. Dans l'exemple considéré, le poussoir 11 anti-rétraction est constitué en forme de doigt appuyant d'un côté de l'élément porteur 12, tandis que la butée élastique 14 est montée du côté opposé au doigt 11 par rapport à l'axe d'oscillation 13. L'axe d'oscillation 13 est monté dans une chape 15 solidaire de la platine inférieure 2c du corps 2 : ainsi, pendant que le corps 2 est animé d'un mouvement de rotation R, l'élément porteur 12 de la meule plate ou briquette 16 est animé d'un mouvement d'oscillation autour de l'axe d'oscillation 13 orienté de préférence sensiblement radialement par rapport à l'axe d'entraînement en rotation R.

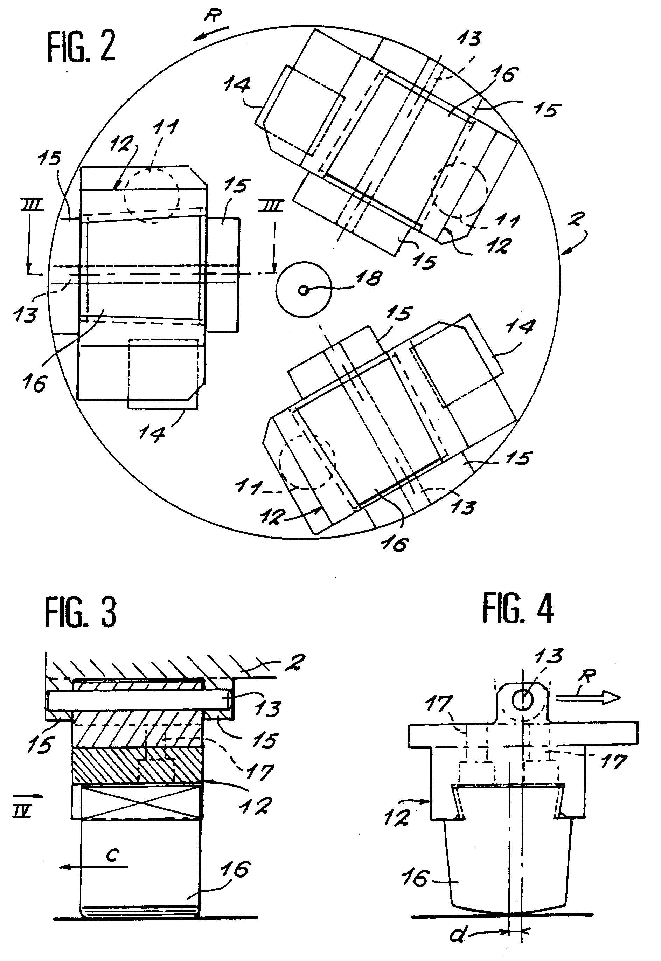

La figure 2 représente un dispositif selon l'invention, dans lequel trois éléments porteurs 12 sont montés oscillants sous l'action des doigts ou poussoirs 11 et la résistance antagoniste des butées élastiques 14 autour d'axes d'oscillation 13 orientés sensiblement radialement. Bien entendu, les dispositifs comportant un nombre quelconque supérieur ou égal à deux d'éléments porteurs ne sortent pas du cadre de la présente invention.

Les briquettes 16 sont montées dans les éléments porteurs 12 à l'aide d'une conformation en mortaise, par exemple en queue d'aronde, qui va en se rétrécissant radialement extérieurement, de manière que l'application de la force centrifuge C engendrée par la rotation R ait tendance à fixer solidement les briquettes 16 aux éléments porteurs 12 par effet de coincement.

Les éléments porteurs 12 peuvent être constitués d'un seul tenant en référence aux figures 1 et 2, ou alternativement peuvent comprendre une première partie constituée en forme de semelle oscillante soumise aux actions antagonistes d'un doigt ou poussoir 11 et d'une butée élastique 14 et une deuxième partie formant support de meule plate 16 et présentant essentiellement une conformation en mortaise: cette deuxième variante présente l'avantage de pouvoir dissocier aisément le support de meule de la semelle d'oscillation en dévissant simplement des vis de solidarisation 17 représentées en traits pointillés sur les figures 3 et 4, ce qui permet d'adapter aisément toutes les tailles de meule 16 aux semelles oscillantes précitées.

Le fonctionnement du dispositif selon l'invention est le suivant :

On injecte à partir de l'alimentation A un fluide tel que de l'eau à l'intérieur de l'arbre d'entraînement en rotation R, jusqu'à remplissage du vérin souple 6, de manière à provoquer un mouvement alternatif de ce vérin souple 6, ce qui provoque un déplacement axial du disque 10 et des doigts ou poussoirs 11, lesquels en appuyant sur les semelles des éléments porteurs 12 exercent sur ceux-ci une action d'oscillation dont le rappel élastique est assuré par les butées 14. A titre d'exemple, une alimentation A produisant un débit d'eau de 6 litres par minute à une pression d'alimentation de 4 bars relatifs permet d'obtenir un régime d'environ 50 oscillations par minute des éléments porteurs 12 et des briquettes 16. Ces résultats sont obtenus en utilisant en tant que butée élastique 14 une butée progressive en élastomère présentant de préférence une dureté voisine de 55 degrés Shore A.

La présence d'un orifice central 18 de restriction de débit (gicleur) dans le cas d'un écoulement d'eau présente en outre l'avantage d'assurer simultanément la lubrification des outils abrasifs en cours de polissage et la montée en pression du vérin 6.

Une manière avantageuse d'obtenir l'écoulement fluide intermittent est d'utiliser une électrovanne placée en amont et commandée par un temporisateur réglable selon une loi d'oscillation prédéterminée à volonté, en établissant ainsi un régime oscillatoire de pression à l'intérieur du vérin souple 6.

Des essais ont montré que le dispositif selon l'invention est particulièrement adapté au polissage ou au surfaçage du granit, dont on sait qu'il se fait dans une ambiance très abrasive préjudiciable à la bonne conservation de pièces mécaniques en mouvement.

Selon une variante perfectionnée de l'invention, on prévoit de déporter l'axe de la meule ou briquette 16 d'une distance prédéterminée de l'axe d'oscillation 13, à l'arrière suivant le sens de rotation pour faciliter le rappel négatif de l'élément porteur 12 soumis aux actions antagonistes du doigt ou poussoir 11 et de la butée élastique 14. Cette disposition traînante par rapport au sens de la rotation R procure un effet de dégagement qui évite le broutage des meules 16 sur les surfaces à polir. La distance prédéterminée d représentée à la figure 4 est avantageusement comprise entre 5 et 25mm, ce qui fournit des résultats améliorés et une mise en forme progressive de la meule plate 16 selon une surface sensiblement cylindrique, dont une seule génératrice à la fois est en contact avec le matériau à polir ou à surfacer. En outre, dans le cas où on alimente le vérin 6 en permanence, en supprimant la temporisation de l'électrovanne, le vérin 6 est constamment sous pression et en position allongée, de sorte que l'on peut polir du marbre ou autre matériau équivalent pour lesquels aucune oscillation n'est nécessaire.

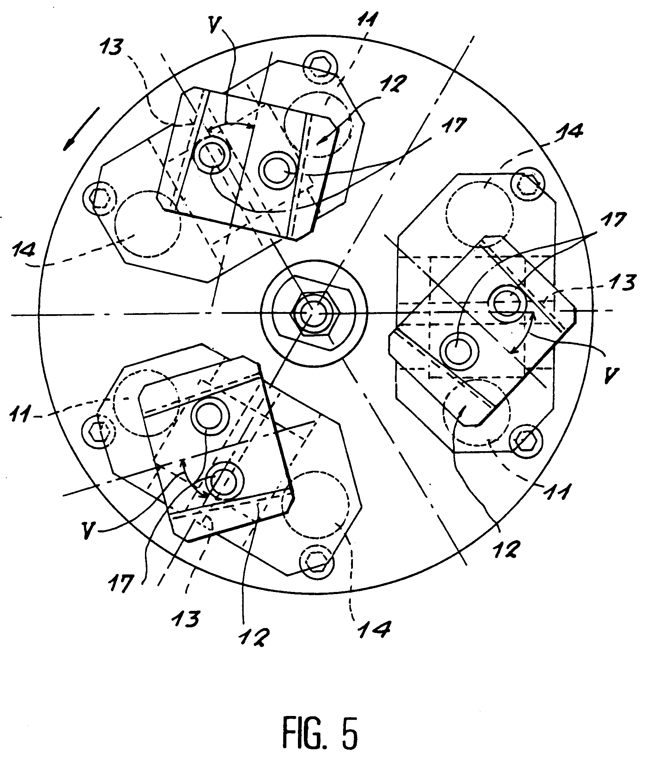

En référence à la figure 5, dans laquelle les références identiques aux références des figures 1 à 4 désignent des éléments identiques ou fonctionnellement équivalents, un autre dispositif selon l'invention comporte des éléments porteurs 12 dont l'axe est orienté suivant un angle V avec la direction radiale correspondante. Avantageusement, l'angle V est voisin de 45° dans un mode de réalisation préféré.

L'orientation des éléments porteurs 12, et par conséquent des meules 16 en forme de briquettes, suivant un angle V avec la direction radiale présente plusieurs avantages : cette orientation facilite considérablement le montage et le démontage des meules 16 en forme de briquettes et permet de réduire l'espace central non soumis à l'action de polissage des meules 16.

Les essais montrent que le polissage et le surfaçage sont pratiqués, grâce à l'invention, de manière plus douce et régulière en raison d'une attaque progressive de la pierre, et que la maniabilité du dispositif est nettement améliorée par rapport à l'art antérieur.

L'invention décrite en référence à un mode de réalisation particulier n'y est nullement limitée, mais couvre au contraire toute modification de forme et toute variante de réalisation de l'invention définie par les revendications annexées.

## Revendications

1. Dispositif de surfaçage ou de polissage de matériaux pierreux, du type comportant au moins deux éléments (12) porteurs de meules plates ou briquettes (16), lesdits éléments (12) étant animés d'un mouvement d'oscillation de manière à faire travailler les meules ou briquettes suivant une génératrice de la surface de la meule ou briquette en contact avec le matériau à polir ou à surfacer lorsque le dispositif est entraîné en rotation lors du surfaçage ou du polissage, caractérisé en ce que les moyens d'entraînement en oscillation des meules plates ou briquettes (16) comportent un écoulement intermittent ou un écoulement continue à débit variable d'un fluide, le mouvement d'oscillation des meules plates ou briquettes (16) étant produit en réponse a l'intermittence dudit écoulement intermittent ou aux variations de débit du dit écoulement continu à débit variable.

2. Dispositif selon la revendication 1, caractérisé en ce que l'écoulement fluide est un écoulement d'eau ou de liquide de refroidissement équivalent, de manière à assurer simultanément la lubrification au cours du polissage et l'entraînement en oscillation des éléments porteurs (12).

3. Dispositif selon l'une quelconque des revendications 1 ou 2, caractérisé en ce que le dispositif comporte un vérin souple (6) présentant au moins une ondulation, ainsi qu'un moyen (14) élastique formant ressort, de manière à faire osciller les segments porteurs (12) entre une première position d'extension du vérin souple (6) et de compression du moyen élastique (14) et une deuxième position de rétraction du vérin souple (6) et de détente élastique dudit moyen élastique (14).

4. Dispositif selon la revendication 3, caractérisé en ce que le vérin souple (6) est solidaire d'un doigt poussoir (11) empêchant la rétraction totale du vérin souple (6) et appuyant simultanément sur une extrémité d'un élément porteur (12).

5. Dispositif selon la revendication 3, caractérisé en ce que le moyen élastique (14) est un ressort ou une butée progressive en élastomère.

6. Dispositif selon l'une quelconque des revendications 1 à 5, caractérisé en ce que les éléments porteurs (12) sont conformés en mortaises d'axe orienté radialement ou sensiblement radialement.

7. Dispositif selon l'une quelconque des revendications 1 à 5, caractérisé en ce que les éléments porteurs (12) sont conformés en mortaises d'axe orienté suivant un angle avec la direction radiale, par exemple voisin de 45°.

8. Dispositif selon l'une des revendications précédentes, caractérisé en ce que l'écoulement fluide est soumis à un étranglement (18) par réduction de section, par exemple gicleur

9. Dispositif selon l'une des revendications précédentes, caractérisé en ce que l'écoulement fluide est commandé de manière réglable par des moyens appropriés, notamment du genre électrovanne commandée par un temporisateur ou analogue.

10. Dispositif selon l'une des revendications précédentes, caractérisé en ce que le dispositif est conformé en chambre (2) sensiblement cylindrique traversée par ledit écoulement fluide, munie d'une extrémité de montage (1) sur l'arbre d'entraînement en rotation et munie d'une autre extrémité (2c) conformée en platine de support des éléments porteurs (12).

## Claims

1. Device for surfacing or polishing stone materials of the type comprising at least too support elements (12) of flat grinding means or briquettes (16), said elements (12) being activated by an oscillating movement in order to work the grinding means or briquettes following a generating line of the surface of the grinding means or briquette in contact with the material to be polished or surfaced, when the device is driven in rotation at the time of surfacing or polishing, characterised in that the oscillating driving means of the flat grinding means or briquettes (16) comprise an intermittent flow of fluid or a continuous flow of fluid with a variable flow rate, the oscillating movement of the flat grinding means or briquettes (16) being produced in response to the intermittence of said intermittent flow or to variations in the flow rate of said continuous flow with variable flow rate.

2. Device according to claim 1, characterised in that the flow of fluid is a flow of water or an equivalent cooling liquid, in order simultaneously to ensure lubrication during the polishing and the oscillating drive of the support elements (12).

3. Device according to any one of claims 1 or 2, characterised in that the device comprises a flexible jack (6) with at least one wave, and an elastic means (14) forming a spring, so as to oscillate the support elements (12) between a first position of extension of the flexible jack (6) and compression of the elastic means (14) and a second position of retraction of the flexible jack (6) and spring back of the said elastic means (14).

4. Device according to claim 3, characterised in that the flexible jack (6) is connected to a pushing finger (11) preventing the total retraction of the flexible jack (6) and bearing simultaneously on one end of a support element (12).

5. Device according to claim 3, characterised in that the elastic means (14) is a spring or a progressive stop made of an elastomer.

6. Device according to any one of claims 1 to 5, characterised in that the support elements (12) comprise a mortise type shaping having an axis aligned radially or substantially radially.

7. Device according to any one of claims 1 to 5, characterised in that the support elements (12) comprise a mortise type shaping having an axis aligned according to an angle with the radial direction (for example in the region of 45°).

8. Device according to one of the preceding claims, characterised in that the fluid flow is subjected to a contraction (18) by a reduction in the cross section, for example a nozzle.

9. Device according to one of the preceding claims, characterised in that the fluid flow is controlled in an adjustable manner by suitable means, in particular of the electrovalve type controlled by a timer or the like.

10. Device according to one of the preceding claims, characterised in that the device is in the form of an almost cylindrical chamber (2) traversed by the said fluid flow, provided with an end (1) for mounting onto the rotational drive shaft and another end (2c) in the form of a support plate for the support elements (12),

## Patentansprüche

1. Vorrichtung zum Planieren oder Polieren von steinigen Materialien, mit mindestens zwei Tragelementen (12) für Schleifplatten oder Schleifsteine (16), wobei die Tragelemente (12) mit einer Oszillationsbewegung so angeregt sind, daß sich die Schleifplatten oder Schleifsteine entsprechend einer Erzeugenden der Oberfläche der Schleifplatte oder des Schleifsteins bewegen, wenn die Vorrichtung während des Planierens oder Polierens rotierend angetrieben ist, **dadurch gekennzeichnet**, daß die Antriebsmittel für die Osziilationsbewegung der Schleifplatten oder Schleifsteine (16) einen intermittierenden Ausfluß oder einen kontinuierlichen Ausfluß mit variablem Durchsatz eines Fluids aufweisen, und daß die Oszillationsbewegung der Schleifplatten oder Schleifsteine (16) als Antwort auf diesen intermittierenden Ausfluß oder die Änderungen dieses kontinuierlichen Ausflusses mit variablem Durchsatz erfolgt.

2. Vorrichtung nach Anspruch 1, **dadurch gekennzeichnet**, daß der Ausfluß des Fluids ein Ausfluß von Wasser oder einer entsprechenden Kühlflüssigkeit ist, sodaß damit gleichzeitig die Schmierung während des Polierens und der Oszillationsantrieb der Tragelemente (12) sichergestellt sind.

3. Vorrichtung nach einem der Ansprüche 1 oder 2, **dadurch gekennzeichnet**, daß die Vorrichtung ein mindestens eine Welle aufweisendes flexibles Druckglied (6) und ein elastisches Federmittel (14) aufweist, sodaß die Tragelemente (12) zwischen einer ersten Position unter Ausdehnung des flexiblen Druckgliedes (6) bei Kompression des Federmittels (14) und einer zweiten Position unter Zusammenziehung des flexiblen Druckgliedes (6) bei elastischer Entspannung dieses Federmittels (14) in oszillierende Bewegung versetzt werden.

4. Vorrichtung nach Anspruch 3, **dadurch gekennzeichnet**, daß das flexible Druckglied (6) mit einem Stößel (11) ausgestattet ist, der die vollständige Zurückziehung des flexiblen Druckgliedes (6) verhindert und sich auf einem Vorsprung eines Tragelementes (12) abstützt.

5. Vorrichtung nach Anspruch 3, **dadurch gekennzeichnet**, daß das Federmittel (14) eine Feder oder ein progressives Widerlager aus elastomerem Material ist.

6. Vorrichtung nach einem der Ansprüche 1 bis 5, **dadurch gekennzeichnet**, daß die Tragelemente (12) Zapfenlöcher aufweisen, deren Achsen radial oder im wesentlichen radial orientiert sind.

7. Vorrichtung nach einem der Ansprüche 1 bis 5, **dadurch gekennzeichnet**, daß die Tragelemente (12) Zapfenlöcher aufweisen, deren Achsen in einem Winkel (beispielsweise etwa 45°) zu der radialen Richtung orientiert sind.

8. Vorrichtung nach einem der vorangehenden Ansprüche 1 bis 7, **dadurch gekennzeichnet**, daß der Ausfluß des Fluids durch eine Einschnürung (18) mit Querschnittsverengung (beispielsweise durch eine Düse) erfolgt.

9. Vorrichtung nach einem der vorangehenden Ansprüche 1 bis 8, **dadurch gekennzeichnet**, daß der Ausfluß des Fluids durch geeignete Mittel geregelt ist, insbesondere durch ein über ein Zeitglied oder dgl. gesteuertes Elektroventil.

10. Vorrichtung nach einem der vorangehenden Ansprüche 1 bis 9, **dadurch gekennzeichnet**, daß die Vorrichtung eine von dem Ausfluß des Fluids durchströmte und im wesentlichen zylindrische Kammer (2) aufweist, die mit einem Montageende (1) für die rotierende Antriebswelle und mit einem als Tragplatine für die Tragelemente (12) ausgebildeten Montageende (2c) versehen ist.
